(19)

Europäisches
Patentamt
European
Patent Office
Office européen
des brevets

(11) **EP 2 330 411 A2**

(12) **EUROPEAN PATENT APPLICATION**
published in accordance with Art. 153(4) EPC

(43) Date of publication:
   **08.06.2011 Bulletin 2011/23**

(21) Application number: **09818000.3**

(22) Date of filing: **30.09.2009**

(51) Int Cl.:
   **G01N 27/407** (2006.01)   **G01N 27/417** (2006.01)
   **H01L 29/786** (2006.01)   **H01L 29/06** (2006.01)
   **G01N 27/12** (2006.01)   **G01N 27/414** (2006.01)

(86) International application number:
   **PCT/KR2009/005616**

(87) International publication number:
   **WO 2010/038990 (08.04.2010 Gazette 2010/14)**

(84) Designated Contracting States:
   **AT BE BG CH CY CZ DE DK EE ES FI FR GB GR
   HR HU IE IS IT LI LT LU LV MC MK MT NL NO PL
   PT RO SE SI SK SM TR**
   Designated Extension States:
   **AL BA RS**

(30) Priority: **30.09.2008   KR 20080096090
                30.09.2008   KR 20080096091
                30.09.2008   KR 20080096092
                30.09.2009   KR 20090093055**

(71) Applicants:
   • **Iljin Copper Foil Co., Ltd.
     Iksan-si
     Jeollabuk-do 570-998 (KR)**
   • **Cios Inc.
     Yuseong-gu, Daejeon-city 305-701 (KR)**

(72) Inventors:
   • **PARK, Jin Su
     Daejeon-city 302-781 (KR)**
   • **YOON, Byung Young
     Yeongi-gun
     Chungcheongnam-Do 339-761 (KR)**
   • **PARK, Jung Won
     Daejeon-city 305-759 (KR)**
   • **CHO, Jung Hwan
     Yeongi-gun
     Chungcheongnam-Do 339-761 (KR)**
   • **KIM, Sang Beom
     Yeongi-gun
     Chungcheongnam-Do 339-824 (KR)**

(74) Representative: **Kling, Simone
     Lavoix Munich
     Bayerstrasse 85a
     80335 München (DE)**

(54) **NITROGEN-OXIDE GAS SENSOR**

(57)   A nitrogen-oxide gas sensor that is able to measure a nitric oxide and a nitrogen dioxide at the same time, and ensure sensing accuracy and stability over a long period of time.

   The nitrogen-oxide gas sensor includes: a first oxygen ion conductive solid electrolyte; a first film contacting the first oxygen ion conductive solid electrolyte and formed of a metal oxide; a second film contacting the first oxygen ion conductive solid electrolyte and formed of a metal oxide; a power supply source for applying a current to the first and second films by electrically connecting a first node to the first film and a second node to the second film; a measurement unit for measuring an electric potential difference between the first and second nodes; and a temperature adjustment unit for uniformly maintaining a temperature of at least one of the first and second films.

FIG. 1

EP 2 330 411 A2

## Description

### TECHNICAL FIELD

The present invention relates to a nitrogen-oxide gas sensor, and more particularly, to a nitrogen-oxide gas sensor that has increased accuracy.

### BACKGROUND ART

A nitrogen-oxide gas is indicated as NOx since it includes a nitric oxide (NO), a nitrogen dioxide ($NO_2$), or a nitrous oxide ($N_2O$). Here, the nitric oxide and the nitrogen dioxide occupy most of the nitrogen-oxide gas, and act as atmospheric pollution sources. Thus, concentrations of the nitric oxide and the nitrogen dioxide are measured to suitably control emission amounts.

A conventional method of using equilibrium potential may be used to measure concentration of a nitrogen-oxide gas. Here, an electrochemical cell is formed by using a nitrate in a solid state as a sensing electrode in a solid electrolyte, and forming a precious metal electrode to uniformly maintain ion activity in the solid electrolyte, and the concentration of the nitrogen-oxide gas is measured by using an electromotive force of the electrochemical cell. However, a melting point of the sensing electrode is low, and thus, such a conventional method cannot be applied to a high temperature gas.

Alternatively, the concentration of the nitrogen-oxide gas may be measured by using a current type sensor.

Here, a nitrogen dioxide is converted to a nitric oxide by using an oxygen pumping cell, and a current generated by oxygen ions obtained by decomposing the nitric oxide is measured to determine the concentration of the nitrogen-oxide gas. However, such a method is structurally limited since the oxygen pumping cell is used, and it is difficult to measure a total amount of the nitrogen-oxide gas since the measured current largely changes according to temperature and is very small when the concentration is below or equal to hundreds of ppm.

Alternatively, the concentration of the nitrogen-oxide gas may be measured by using mixed dislocation. Here, a sensing electrode is formed by using a metal oxide at one side of an oxygen ion conductive solid electrolyte, and a reference electrode is formed by using a precious metal at another side of the oxygen ion conductive solid electrolyte, and an electric potential difference between the sensing electrode and the reference electrode is measured. In other words, the sensing electrode is reactive to a nitrogen-oxide and oxygen, but the reference electrode is only reactive to oxygen, and thus the electric potential difference is generated between the sensing electrode and the reference electrode according to concentration of the nitrogen-oxide gas in a gas. Thus, the concentration of the nitrogen-oxide gas is determined by measuring the electric potential difference. However, measurement accuracy may remarkably decrease in a nitrogen-oxide gas in which a nitrogen dioxide and a nitric oxide are mixed, due to a difference between electromotive force signs generated according to a decomposition reaction of the nitrogen dioxide and the nitric oxide.

Accordingly, a method of using a conversion cell that converts a nitrogen-oxide gas into one gas form is used, but there is a limit to converting the entire nitrogen-oxide gas to a nitric oxide or nitrogen dioxide, and thus it is difficult to measure the entire concentration of the nitrogen-oxide gas.

Meanwhile, the nitrogen-oxide gas is usually sensitive to temperature. Accordingly, the temperature of a sensing electrode is uniformly maintained while designing a nitrogen-oxide gas sensor. Here, the nitrogen-oxide gas sensor is used to measure an amount of a nitrogen-oxide gas in a car exhaust or other pollution sources, but accuracy of the nitrogen-oxide gas sensor may decrease due to a gas other than the nitrogen-oxide gas.

### DESCRIPTION OF THE DRAWINGS

FIG. 1 is a schematic diagram of a nitrogen-oxide gas sensor according to an embodiment of the present invention;

FIG. 2 is a schematic diagram of a nitrogen-oxide gas sensor according to another embodiment of the present invention;

FIG. 3 is a schematic diagram of a nitrogen-oxide gas sensor according to another embodiment of the present invention;

FIG. 4 is a schematic diagram of a nitrogen-oxide gas sensor according to another embodiment of the present invention;

FIG. 5 is a schematic diagram of a nitrogen-oxide gas sensor according to another embodiment of the present invention;

FIG. 6 is a schematic diagram of a nitrogen-oxide gas sensor according to another embodiment of the present invention;

FIG. 7 is a schematic diagram of a nitrogen-oxide gas sensor according to another embodiment of the present invention;

FIG. 8 is a schematic diagram of a nitrogen-oxide gas sensor according to another embodiment of the present invention;

FIG. 9 is a schematic diagram of a nitrogen-oxide gas sensor according to another embodiment of the present invention;

FIG. 10 is a schematic diagram of a nitrogen-oxide gas sensor according to another embodiment of the present invention;

FIG. 11 is a schematic diagram of a nitrogen-oxide gas sensor according to another embodiment of the present invention;

FIG. 12 is a schematic diagram of a nitrogen-oxide gas sensor according to another embodiment of the present invention;

FIG. 13 is a schematic diagram of a nitrogen-oxide gas sensor according to another embodiment of the present invention;

FIG. 14 is a schematic diagram of a nitrogen-oxide gas sensor according to another embodiment of the present invention;

FIG. 15 is a schematic diagram of a nitrogen-oxide gas sensor according to another embodiment of the present invention;

FIG. 16 is a schematic diagram of a nitrogen-oxide gas sensor according to another embodiment of the present invention;

FIG. 17 is a schematic diagram of a nitrogen-oxide gas sensor according to another embodiment of the present invention;

FIG. 18 is a schematic diagram of a nitrogen-oxide gas sensor according to another embodiment of the present invention;

DETAILED DESCRIPTION OF THE INVENTION

TECHNICAL PROBLEM

The present invention provides a nitrogen-oxide gas sensor that is able to measure a nitric oxide and a nitrogen dioxide at the same time, and has sensing accuracy.

TECHNICAL SOLUTION

According to an aspect of the present invention, there is provided a nitrogen-oxide gas sensor including: a first oxygen ion conductive solid electrolyte; a first film contacting the first oxygen ion conductive solid electrolyte and formed of a metal oxide; a second film contacting the first oxygen ion conductive solid electrolyte and formed of a metal oxide; a power supply source for applying a current to the first and second films by electrically connecting a first node to the first film and a second node to the second film; a measurement unit for measuring an electric potential difference between the first and second nodes; and a temperature adjustment unit for uniformly maintaining a temperature of at least one of the first and second films.

At least one of the first and second films may include a p-type semiconductor metal oxide and an n-type semiconductor metal oxide.

The n-type semiconductor metal oxide may be mixed with the p-type semiconductor metal oxide.

The n-type semiconductor metal oxide may form a solid solution with the p-type semiconductor metal oxide.

One of the first and second films, which includes the n-type semiconductor metal oxide, may have a stacked structure of a film including a p-type semiconductor metal oxide, and a buffer film including the n-type semiconductor metal oxide.

The temperature adjustment unit may include: a resistor; and an insulating layer covering the resistor.

The temperature adjustment unit may be embedded in the first oxygen ion conductive solid electrolyte.

The nitrogen-oxide gas sensor may further include an oxygen cell separated from at least one of the first and second films, and measuring oxygen concentration or pumping oxygen in a space between the oxygen cell and the at least one of the first and second films.

The oxygen cell may include: a second oxygen ion conductive solid electrolyte; a first electrode contacting the second oxygen ion conductive solid electrolyte; and a second electrode contacting the second oxygen ion conductive solid electrolyte.

The nitrogen-oxide gas sensor may further include a filter member including an oxidation catalyst.

The oxidation catalyst may include a precious metal particle.

ADVANTAGEOUS EFFECTS

According to the present invention, a nitric oxide and a nitrogen dioxide can be measured at the same time by using a first film and a second film.

At the same time, a signal error due to temperature can be reduced, thereby increasing sensing accuracy.

Sensing accuracy can be increased more since the concentration of oxygen can be uniformly maintained.

Sensing accuracy can be increased more since a signal error due to a gas other than a nitrogen-oxide gas can be reduced.

Also, sensing accuracy can be increased by using a third film connected to the first film in parallel, and a fourth film connected to the second film in parallel.

In addition, stability over a long period of time can be ensured by using a p-type semiconductor metal oxide for the first film, a p-type semiconductor metal oxide for the second film, and further using an n-type semiconductor metal oxide for the first film.

MODE OF THE INVENTION

Hereinafter, the present invention will be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

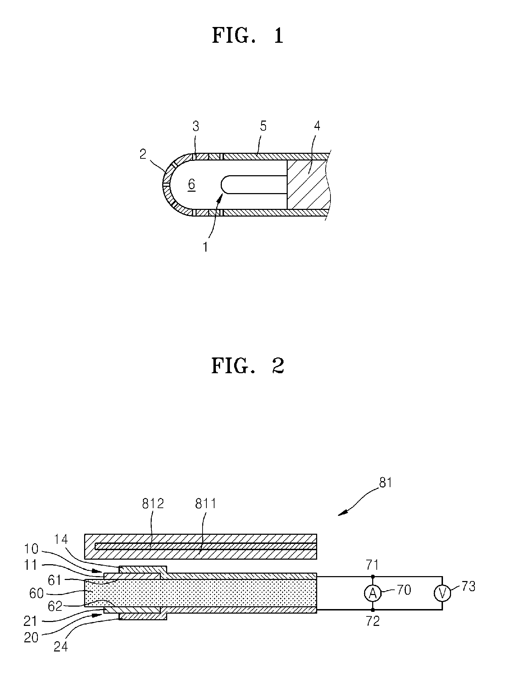

FIG. 1 is a schematic cross-sectional view of an assembly of a nitrogen-oxide gas sensor 1 according to an embodiment of the present invention.

Referring to FIG. 1, the nitrogen-oxide gas sensor 1 is fixed to a support holder 4, the support holder 4 is combined with a casing 5, and a cap 2 is combined with a front end of the casing 5. The support holder 4, the casing 5, and the cap 2 may be integrally formed. A plurality of vent holes 3 may be formed on the casing 5 and the cap 2, and a gas, such as car exhaust, of an object in which the assembly is installed may be allowed to flow into an internal space 6 of the casing 5 through the vent holes 3 so that the nitrogen-oxide gas sensor 1 measures the concentration of a nitrogen-oxide gas in the gas.

FIG. 2 is a schematic diagram of a nitrogen-oxide gas sensor according to an embodiment of the present invention.

Referring to FIG. 2, the nitrogen-oxide gas sensor includes a first oxygen ion conductive solid electrolyte 60, first and second films 10 and 20 contacting the first oxygen ion conductive solid electrolyte 60, a power supply source 70, and a measurement unit 73.

The first oxygen ion conductive solid electrolyte 60 is capable of conducting oxygen ions at a high temperature, and may include stabilized zirconia, $CeO_2$, or $ThO_2$. Specifically, yttria-stabilized zirconia (YSZ) may be used as the stabilized zirconia.

The first film 10 contacts a first region 61 of the first oxygen ion conductive solid electrolyte 60, and the second film 20 contacts a second region 62 of the first oxygen ion conductive solid electrolyte 60.

The first and second films 10 and 20 are formed of a metal oxide that is reactive to a nitrogen-oxide and oxygen when power is supplied to the first and second films 10 and 20.

According to an embodiment of the present invention, the first and second films 10 and 20 may be formed of the same or different p-type semiconductor metal oxides. This will be described later in detail.

Referring to FIG. 2, the first and second regions 61 and 62 may face each other in the first oxygen ion conductive solid electrolyte 60, but locations of the first and second regions 61 and 62 are not limited thereto, and the first and second regions 61 and 62 may be disposed in different regions on the same plane of the first oxygen ion conductive solid electrolyte 60. However, the first and second regions 61 and 62 may not overlap each other.

The first and second films 10 and 20 are electrically respectively connected to a first node 71 and a second node 72 of the power supply source 70, and a uniform current are supplied to the first and second films 10 and 20. Here, a first conductive film 14 may be formed on the first film 10, and the first conductive film 14 may be electrically connected to the first node 71. Also, a second conductive film 24 may be formed on the second film 20, and the second conductive film 24 may be electrically connected to the second node 72. The first and second conductive films 14 and 24 may be formed of an electric conductive metal, and in detail, may be formed of a precious metal capable of enduring a corrosive environment. At least one selected from the group consisting of gold (Au), silver (Ag), platinum (Pt), iridium (Ir), palladium (Pd), and an alloy thereof may be used as the precious metal, and in detail, gold or platinum may be used as the precious metal.

As shown in FIG. 2, the first and second conductive films 14 and 24 may be patterned as a thin film on the first oxygen ion conductive solid electrolyte 60 so as to also perform a wire function. However, the present invention is not limited thereto, and although it is not illustrated, a separate wire may be further formed to cover the first and second conductive films 14 and 24. Here, the wire may not be limited to the precious metal, and any metal may be used as long as it has a good electric conductivity when used as a wire. Such a description of the wire may be applied to all embodiments of the present invention.

Meanwhile, the first film 10 may be used as a positive electrode, and the second film 20 may be used as a negative electrode.

An anodic reaction for converting oxygen ions to an oxygen gas is generated on an interface between the first film 10 constituting a positive electrode, and the first oxygen ion conductive solid electrolyte 60, and at the same time, if an NO gas exists, the anodic reaction is generated according to the NO gas as shown in Reaction Formula 1 below, and thus a size of a voltage necessary to make a uniform current flow is reduced. Here, since anodic polarization is applied to the first film 10, a reaction with respect to NO is big, and a reaction with respect to NO$_2$ is small.

[Reaction Formula 1]

$$O^{2-} = \frac{1}{2}O_2 + 2e^-, NO + O^{2-} = NO_2 + 2e^-$$

A cathodic reaction for converting an oxygen gas to oxygen ions is generated on an interface between the second film 20 constituting a negative electrode, and the first oxygen ion conductive solid electrolyte 60, and at the same time, if an NO$_2$ gas exists, the cathodic reaction is generated according to NO$_2$ as shown in Reaction Formula 2 below, and thus a size of a voltage necessary to make a uniform current flow is reduced. Here, since cathodic polarization is applied to the second film 20, a reaction with respect to NO$_2$ is big, and a reaction with respect to NO is small.

[Reaction Formula 2]

$$\frac{1}{2}O_2 + 2e^- = O^{2-}, NO_2 + 2e^- \Rightarrow NO + O^{2-}$$

Here, the measurement unit 73 is connected to the first and second nodes 71 and 72 so as to measure an electric potential difference between the first and second nodes 71 and 72.

As described above, measurement accuracy of both NO and NO$_2$ may be increased if a nitrogen-oxide gas includes both NO and NO$_2$.

When the first and second films 10 and 20 are exposed to the nitrogen-oxide gas at a high temperature, an electric potential difference changes according to concentrations of a nitrogen dioxide and a nitric oxide in the nitrogen-oxide gas, and thus a concentration sum of the nitrogen dioxide and the nitric oxide is measured.

Meanwhile, in the nitrogen-oxide gas sensor, at least one of the first and second films 10 and 20 are very sensitive to temperature.

Accordingly, the nitrogen-oxide gas sensor of FIG. 2 according to the current embodiment of the present invention includes a first temperature adjustment unit 81 facing the first film 10. The first temperature adjustment unit 81 may be separated from the first film 10 by a predetermined interval. Although not illustrated in FIG. 2, a spacer formed of an insulator may be further disposed between the first temperature adjustment unit 81 and the first film 10.

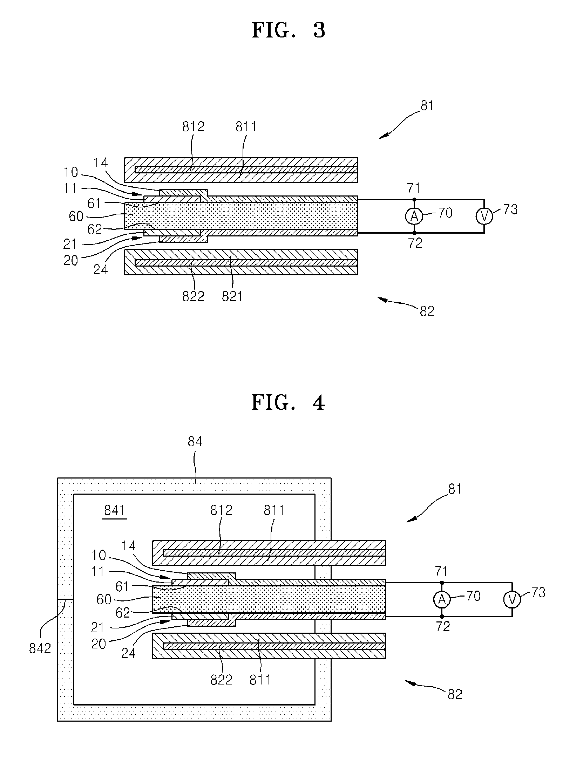

As well as such a temperature adjustment unit installed to face the first film 10, as shown in FIG. 3, a second temperature adjustment unit 82 may be further installed to face the second film 20. The second temperature adjustment unit 82 may be also separated from the second film 20 by a predetermined interval, and although not illustrated in FIG. 3, a spacer formed of an insulator may be further disposed between the second temperature adjustment unit 82 and the second film 20.

Aside from disposing the spacers, structures of the first and second temperature adjustment units 81 and 82 are not limited as long as they respectively face the first and second films 10 and 20. For example, the first and second temperature adjustment units 81 and 82 may be installed to respectively face the first and second films 10 and 20 by using a support holder (not shown) for supporting the nitrogen-oxide gas sensor.

According to an embodiment of the present invention, the first temperature adjustment unit 81 includes a first insulator 811, and a first resistor 812 embedded by the first insulator 811. Also, the second temperature adjustment unit 82 includes a second insulator 821, and a second resistor 822 embedded by the second insulator 821.

The first and second resistors 812 and 822 may have a thin conductive metal film pattern, and perform operations of a heater as power is applied.

Referring to FIG. 3, the first and second resistors 812 and 822 may be connected in parallel, and to the same power supply source. Accordingly, the first and second films 10 and 20 may be adjusted to have the same temperature by using the first and second resistors 812 and 822. Thus, the first and second resistors 812 and 822 may be disposed to face the first and second films 10 and 20.

Here, structures of the first and second resistors 812 and 822 are not limited as long as they adjust the first and second films 10 and 20 to have the same temperature.

At least one of the first and second resistors 812 and 822 may adjust the temperature by repeating an operation of applying or not applying power to the first and second resistors 812 and 822.

As such, according to the current embodiment of the present invention, the temperatures of the first and second films 10 and 20 are maintained to be identical by using at least one of the first and second temperature adjustment units 81 and 82, thereby reducing a signal error due to a temperature.

The nitrogen-oxide gas including NO and $NO_2$ that flows into the nitrogen-oxide gas sensor may further include a gas generating a sensing error. Such a gas other than the nitrogen-oxide gas generates the sensing error, thereby deteriorating accuracy of the nitrogen-oxide gas sensor.

Accordingly, a filter member (not shown) including an oxidation catalyst may be disposed on a path of the nitrogen-oxide gas.

For example, referring back to FIG. 1, since a nitrogen-oxide gas is flown in through the vent holes 3 of the cap 2 and the casing 5, a paste including an oxidation catalyst may be coated on the cap 2 and the casing 5 so that the nitrogen-oxide gas is oxidized by the oxidation catalyst while passing through the cap 2 and the casing 5. Moreover, when at least one of the cap 2 and the casing 5 is formed of a ceramic material, an oxidation catalyst may be impregnated in a ceramic carrier.

The oxidation catalyst may be formed of a precious metal, and may be selected from the group consisting of gold (Au), silver (Ag), platinum (Pt), iridium (Ir), palladium (Pd), and an alloy thereof. Particles of the precious metal may be put into a solution, and the cap 2 and the casing 5 may be deposited in the solution so that the particles are coated on surfaces of the cap 2 and the casing 5. Alternatively, the particles may be included in a paste, and the cap 2 and the casing 5 may be coated with the paste.

As such, a gas component interrupting (hereinafter referred to as an interruption gas) the sensing of the nitrogen-oxide gas is oxidized by using the oxidation catalyst, thereby increasing measurement accuracy of the nitrogen-oxide gas.

FIG. 4 is a diagram of a nitrogen-oxide gas sensor according to another embodiment of the present invention, wherein a structure 84 is formed to surround the first and second films 10 and 20 of the nitrogen-oxide gas sensor of FIG. 3, and includes an oxidation catalyst.

The structure 84 forms a space 841 in the structure 84, and may be formed of a porous material so that a nitrogen-oxide gas diffuses and penetrates through the space 841. Accordingly, the structure 84 may be formed of an alumina, and an inner surface of the structure 84 may be coated with an oxidation catalyst as described above or the alumina may include the oxidation catalyst.

The structure of the structure 84 is not limited thereto, and a minute through hole 842 constituting a diffusion region may be formed so that the nitrogen-oxide gas penetrates through the space 841.

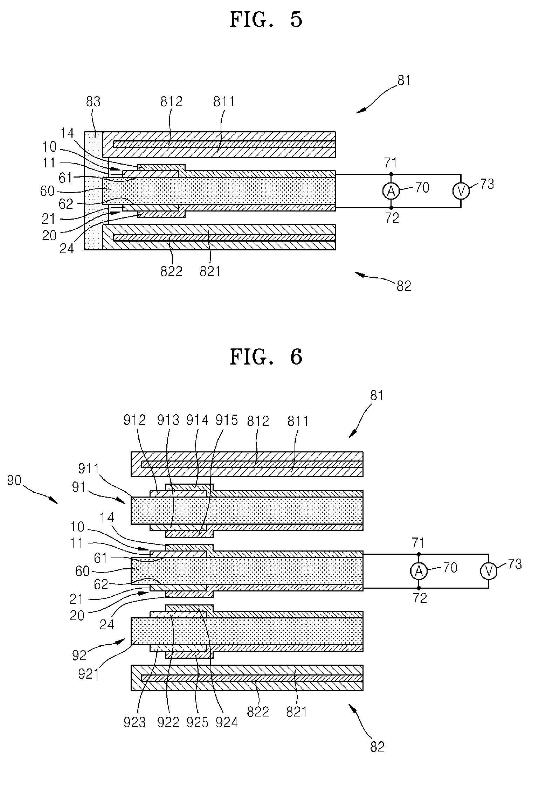

FIG. 5 is a diagram of a nitrogen-oxide gas sensor according to another embodiment of the present invention.

Referring to FIG. 5, the first temperature adjustment unit 81 is installed to face the first film 10, and the second temperature adjustment unit 82 is installed to face the second film 20, and a filter member 83 is formed by filling a paste including an oxidation catalyst in a front surface of a space between the first and second films 10 and 20 formed by the first and second temperature adjustment units 81 and 82.

The filter member 83 removes a gas that interrupts sensing of the nitrogen-oxide gas, thereby increasing sensing accuracy. The filter member 83 may be formed of a porous alumina so that the nitrogen-oxide gas is diffused and penetrates through the filter member 83. The filter member 83 may fill up to a side space of the first and second films 10 and 20 along the front surface, and a separate vent hole may be formed on the filter member 83.

Although not illustrated, instead of separately forming the filter member 83, the oxidation catalyst may be included in the first and second insulators 811 and 821 where the first and second temperature adjustment units 81 and 82 face the first and second films 10 and 20, or the oxidation catalyst may be coated on the surfaces of the first and second insulators 811 and 821. Alternatively, a paste including the oxidation catalyst may be thinly coated on the surfaces of the first and second films 10 and 20. The detailed method thereof is as described above.

FIG. 6 is a diagram of a nitrogen-oxide gas sensor according to another embodiment of the present invention.

In the nitrogen-oxide gas sensor according to the current embodiment of the present invention, an oxygen cell 90 is further installed in the nitrogen-oxide gas sensor of FIG. 3. A first oxygen cell 91 is disposed between the first temperature adjustment unit 81 and the first film 10, and a second oxygen cell 92 is disposed between the second temperature adjustment unit 82 and the second film 20.

The first oxygen cell 91 is formed by forming a first upper electrode 912 and a first lower electrode 913 respectively on the top and bottom of a second oxygen ion conductive solid electrolyte 911, and then forming a third conductive film 914 and a fourth conductive film 915 to cover the second oxygen ion conductive solid electrolyte 911. The second oxygen cell 92 is formed by forming a second upper electrode 922 and a second lower electrode 923 respectively on the top and bottom of a third oxygen ion conductive solid electrolyte 921, and then forming a fifth conductive film 924 and a sixth conductive film 925 to cover the third oxygen ion conductive solid electrolyte 921. The first upper electrode 912, the second lower electrode 913, the second upper electrode 922, and the second lower electrode 923 may be formed of a precious metal selected from the group consisting of gold (Au), silver (Ag), platinum (Pt), iridium (Ir), palladium (Pd), and an alloy thereof. Also, the third conductive film 914, the fourth conductive film 915, the fifth conductive film 924, and the sixth conductive film 925 may be also formed of a precious metal selected from the group consisting of gold (Au), silver (Ag), platinum (Pt), iridium (Ir), palladium (Pd), and an alloy thereof.

Accordingly, the first upper electrode 912 and the third conductive film 914, the second lower electrode 913 and the fourth conductive film 915, the second upper electrode 922 and the fifth conductive film 924, and the second lower electrode 923 and the sixth conductive film 925 may be each integrally formed.

The first oxygen cell 91 and the second oxygen cell 92 may be an oxygen pumping cell or a limited current type oxygen measuring cell.

The limited current type oxygen measuring cell measures oxygen concentration by gradually increasing a voltage from one electrode to another from among the electrodes on the top and bottom of a solid electrolyte, and checking a region where a current does not increase above a predetermined value.

When oxygen concentration changes, the first and second oxygen cells 91 and 92 measure the change, and compensate for an error in the amount of nitrogen-oxide gas sensed by the first and second films 10 and 20, by a value corresponding to the changed value.

In the oxygen pumping cell, one electrode shows a cathodic reaction and another electrode shows an anodic reaction from among the electrodes on the top and bottom of a solid electrolyte. Here, in the cathodic reaction, an oxygen gas is converted to oxygen ions and provided to the solid electrolyte according to Reaction Formula 2 above, and in the anodic reaction, an oxygen gas is generated as the solid electrolyte reacts with oxygen ions according to Reaction Formula 1 above.

Here, an electric potential difference between the electrodes is measured to sense the oxygen concentration, and the oxygen concentration may be adjusted by generating the oxygen gas at one electrode of the solid electrolyte as described above. Accordingly, even when the oxygen concentration changes in a predetermined space, the sensing accuracy regarding sensing of the nitrogen-oxide gas by the first and second films 10 and 20 does not deteriorate.

In FIG. 6, the first and second temperature adjustment units 81 and 82 are disposed outside the first and second oxygen cells 91 and 92, but locations of the first and second temperature adjustment units 81 and 82 are not limited thereto. The first and second temperature adjustment units 81 and 82 may be disposed between the first and second oxygen cells 91 and 92, and the first and second films 10 and 20.

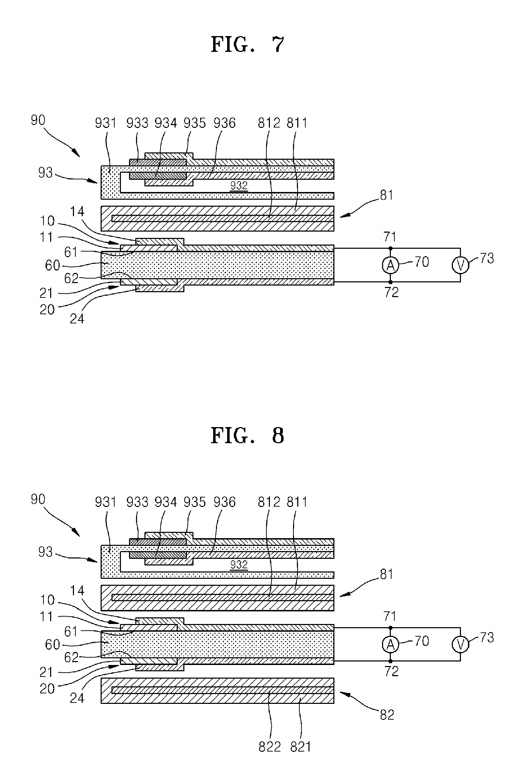

FIG. 7 is a diagram of a nitrogen-oxide gas sensor according to another embodiment of the present invention, wherein a third oxygen cell 93 is further disposed on an outer side of the first temperature adjustment unit 81, as the oxygen cell 90 with respect to the nitrogen-oxide gas sensor of FIG. 2.

The third oxygen cell 93 includes a fourth oxygen ion conductive solid electrolyte 931 having a space 932 therein, wherein a third upper electrode 933 is disposed outside the space 932, and a third lower electrode 934 is disposed inside the space 932. The third upper electrode 933 is connected to a seventh conductive film 935, and the third lower electrode 934 is connected to an eighth conductive film 936.

The third upper electrode 933 and the third lower electrode 934 may be formed of a precious metal selected from the group consisting of gold (Au), silver (Ag), platinum (Pt), iridium (Ir), palladium (Pd), and an alloy thereof. Also, the seventh and eighth conductive films 935 and 936 may be formed of a precious metal selected from the group consisting of gold (Au), silver (Ag), platinum (Pt), iridium (Ir), palladium (Pd), and an alloy thereof. Accordingly, the third upper electrode 933 and the seventh conductive film 935, and the third lower electrode 934 and the eighth conductive film 936 may be each integrally formed.

The third oxygen cell 93 may be an oxygen measuring cell using an electromotive force.

External air flows into the space 932, and an oxygen partial pressure is measured in a region outside the space 932 exposed to the nitrogen-oxide gas compared to an oxygen partial pressure of the external air in the space 932, thereby sensing oxygen concentration outside the space 932 by measuring an electromotive force generated according to the measured oxygen partial pressure.

Here, when the oxygen concentration is changed, the third oxygen cell 93 measures the changed value, and compensates for an error in the amount of nitrogen-oxide gas sensed by the first and second films 10 and 20, by a value corresponding to the changed value.

In a nitrogen-oxide gas sensor of FIG. 8, the third oxygen cell 93 of FIG. 7 is applied to the nitrogen-oxide gas sensor of FIG. 3. Detailed descriptions thereof will be omitted here.

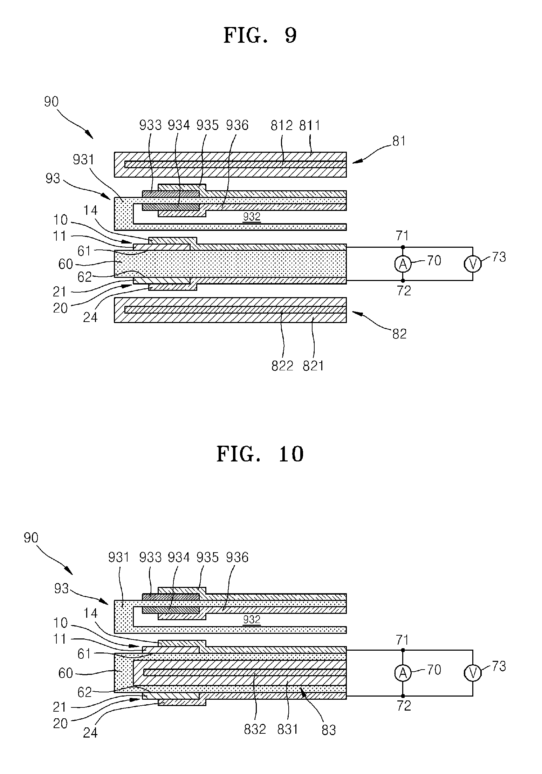

In a nitrogen-oxide gas sensor of FIG. 9, locations of the third oxygen cell 93 and the first temperature adjustment unit 81 are switched in the nitrogen-oxide gas sensor of FIG. 8. As such, locations of an oxygen cell and a temperature adjustment unit may be switched.

In a nitrogen-oxide gas sensor of FIG. 10, a third temperature adjustment unit 83 embedded in the first oxygen ion conductive solid electrolyte 60 is used instead of the first and second temperature adjustment units 81 and 82 of FIG. 8. The third temperature adjustment unit 83 includes a third insulator 831, and a third resistor 932 embedded in the third insulator 831, and an effect of the third temperature adjustment unit 83 is identical to those of the first and second temperature adjustment units 81 and 82.

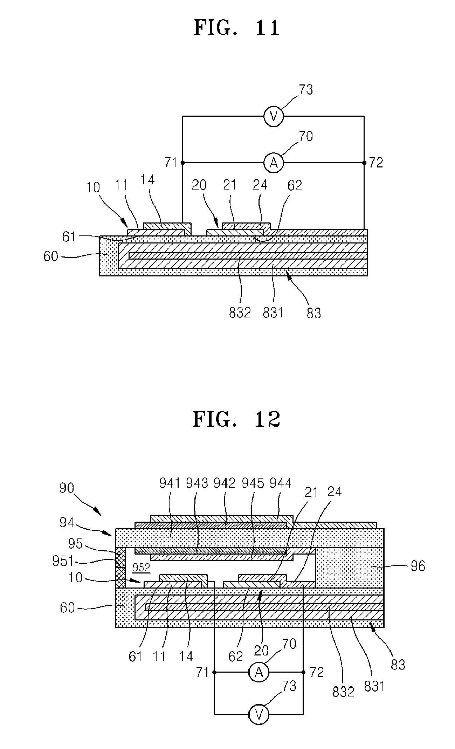

FIG. 11 is a diagram of a nitrogen-oxide gas sensor according to another embodiment of the present invention, wherein the first and second regions 61 and 62 are disposed on the same plane as the first oxygen ion conductive solid electrolyte 60 while the third temperature adjustment unit 83 is embedded in the first oxygen ion conductive solid electrolyte 60.

Here, the first film 10 on the first region 61, and the second film 20 on the second region 62 are formed on the same plane. Since other effects are identical to those described above, details thereof will not be repeated here.

Meanwhile, in FIG. 12, a fourth oxygen cell 94 may be further disposed on the first and second films 10 and 20. Here, the fourth oxygen cell 94 includes a fifth oxygen ion conductive solid electrolyte 941, a fourth upper electrode 942 on a top thereof, and a fourth lower electrode 943 on a bottom thereof. The fourth upper electrode 942 is connected to a ninth conductive film 944, and the fourth lower electrode 943 is connected to a tenth conductive film 945. The fourth upper electrode 942 and the fourth lower electrode 943 may be formed of a precious metal selected from the group consisting of gold (Au), silver (Ag), platinum (Pt), iridium (Ir), palladium (Pd), and an alloy thereof. Also, the ninth conductive film 944 and the tenth conductive film 945 may be formed of a precious metal selected from the group consisting of gold (Au), silver (Ag), platinum (Pt), iridium (Ir), palladium (Pd), and an alloy thereof. Accordingly, the fourth upper electrode 942 and the ninth conductive film 944, and the fourth lower electrode 943 and the tenth conductive film 945 may be each integrally formed.

A first spacer 95 and a second spacer 96 may be disposed at edges of the first oxygen ion conductive solid electrolyte 60 and the fifth oxygen ion conductive solid electrolyte 941, thereby forming a space 952 between the first oxygen ion conductive solid electrolyte 60 and the fifth oxygen ion conductive solid electrolyte 941. A through hole 951 constituting a diffusion region may be formed on the first spacer 95 so that a gas is diffused and flows into the space 952, and the oxidation catalyst described above may be further formed around the through hole 951 of the first spacer 95. Accordingly, an interruption gas may be reduced in the gas that flows into the space 952.

The fourth oxygen cell 94 may be an oxygen pumping cell, but the present invention is not limited thereto, and may be an oxygen measuring cell.

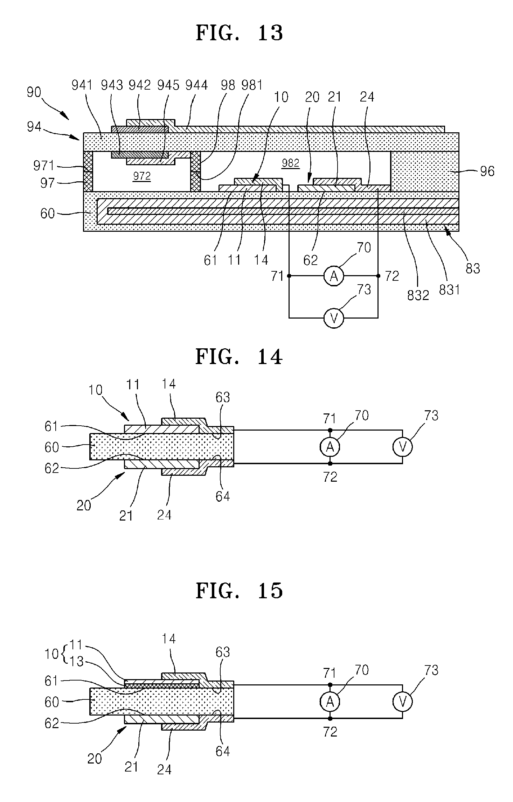

In a nitrogen-oxide gas sensor of FIG. 13, a third spacer 97 and a fourth spacer 98 for defining a space are disposed between the first and fifth oxygen ion conductive solid electrolytes 60 and 941, instead of the first spacer 95. Accordingly, a first space 972 is formed between the third spacer 97 and the fourth spacer 98, and a second space 982 is formed between the fourth spacer 98 and the second spacer 96.

The fourth oxygen cell 94, specifically the fourth lower electrode 943 is disposed in the first space 972, and the first and second films 10 and 20 are disposed in the second space 982. A first through hole 971 constituting a diffusion region may be installed on the third spacer 97 so that a gas is diffused and flows into the first space 972, and a second through hole 981 constituting a diffusion region may be installed on the fourth spacer 98 so that the gas is diffused and flows into the second space 982. The oxidation catalyst may be further formed around the first and second through holes 971 and 981 to reduce an interruption gas in the gas.

Meanwhile, an electrode structure formed in the first oxygen ion conductive solid electrolyte 60 of the nitrogen-oxide gas sensor described above is not limited to the above, and may vary.

FIG. 14 is a diagram of a nitrogen-oxide gas sensor according to an embodiment of the present invention. Like FIG. 2, the nitrogen-oxide gas sensor of FIG. 14 includes a first oxide electrode 11 and a second oxide electrode 21 respectively on the top and bottom of a solid electrolyte 60, and the first and second conductive films 14 and 24 are thinly formed on the solid electrolyte 60 so as to partially cover the first and second oxide electrodes 11 and 21.

Here, the first oxide electrode 11 may be formed of a p-type semiconductor metal oxide, which includes at least one material selected from the group consisting of CuO, NiO, CoO, Cr203, Cu2O, MoO2, Ag20, Bi203, Pr203, MnO, and LaCoO3, a mixture including at least two materials thereof, or a mixture of at least one material thereof and the material of the oxygen ion conductive solid electrolyte described above. According to an embodiment of the present invention, the first oxide electrode 11 may be formed of NiO from among the p-type semiconductor metal oxides. The second film 20 may also be formed of a p-type semiconductor metal oxide, which includes at least one material selected from the group consisting of CuO, NiO, CoO, Cr203, Cu2O, MoO2, Ag20, Bi203, Pr203, MnO, and LaCoO3, a mixture including at least two materials thereof, or a mixture of at least one material thereof and the material of the oxygen ion conductive solid electrolyte described above. According to an embodiment of the present invention, the second oxide electrode 21 may be formed of a p-type semiconductor metal oxide different from the first oxide electrode 11, such as CuO or LaCoO3.

When the first and second oxide electrodes 11 and 21 are formed of a p-type semiconductor metal oxide, measurement by the nitrogen-oxide gas sensor may be unstable. This may be because the concentration of electrons may be higher than the concentration of holes since both first and second oxide electrodes 11 and 21 use a p-type semiconductor metal oxide, and thus, a gas reaction speed may be gradually decreased due to insufficient electrons, thereby increasing a voltage required for a uniform current according to time. Accordingly, concentration of electrons of a p-type semiconductor metal oxide constituting a sensing material is increased. In the current embodiment of the present invention, at least one of the first and second films 10 and 20 is formed of a solid solution of a p-type semiconductor metal oxide and an n-type semiconductor metal oxide, or a mixture of a p-type semiconductor metal oxide and an n-type semiconductor metal oxide. Alternatively, a buffer film including an n-type semiconductor metal oxide is disposed between the first oxygen ion conductive solid electrolyte 60 and at least one of the first and second films 10 and 20. Here, the n-type semiconductor metal oxide may be at least one metal oxide selected from the group consisting of ZnO, MgO, Al2O3, Si02, V2O5, Fe2O3, SrO, BaO, Ti02, BaTi03, Ce02, Nb2O5, Ta2O5, Ga2O3, and W03, or a mixture thereof. According to an embodiment of the present invention, the n-type semiconductor metal oxide may be ZnO.

Accordingly, in FIG. 14, the first oxide electrode 11 is formed of a mixture or a solid solution of the p-type semiconductor metal oxide and the n-type semiconductor metal oxide, thereby obtaining stability of the first film 10 over a long period of time. The same may be applied not only to the first film 10 but also to the second film 20, i.e., a mixture of a solid solution of the n-type semiconductor metal oxide may be included only in the second film 20, or both first and second films 10 and 20. Here, the mixture or the solid solution may mainly include the p-type semiconductor metal oxide or the n-type semiconductor metal oxide.

Alternatively, as shown in FIG. 15, the first film 10 having a stacked structure of the first oxide electrode 11 including the p-type semiconductor metal oxide, and a first buffer film 13 disposed between the first oxide electrode 11 and the first oxygen ion conductive solid electrolyte 60 may be manufactured. Here, an n-type semiconductor metal oxide included in the first buffer film 13 may include at least one metal oxide selected from the group consisting of ZnO, MgO, Al2O3, Si02, V2O5, Fe2O3, SrO, BaO, Ti02, BaTi03, Ce02, Nb2O5, Ta2O5, Ga2O3, and W03, or a mixture thereof. According to an embodiment of the present invention, the n-type semiconductor metal oxide may be ZnO.

A solid solution or a mixture of the p-type semiconductor metal oxide and the n-type semiconductor metal oxide may be used for the first buffer film 13. For example, NiO may be used to form the first oxide electrode 11 including the p-type semiconductor metal oxide, and a NiO-ZnO solid solution in which ZnO is employed in NiO may be used to form the first buffer film 13, so as to form the first film 10. Here, the first buffer film 13 may further increase a mechanical connection characteristic of the first oxide electrode 11 with the first oxygen ion conductive solid electrolyte 60.

As such, by disposing the first buffer film 13 between the first oxide electrode 11 including the p-type semiconductor metal oxide, and the first oxygen ion conductive solid electrolyte 60, unstable measurement by the nitrogen-oxide gas sensor may be prevented and deterioration of the first film 10 may be delayed, thereby ensuring stability over a long period of time.

In FIG. 15, only the first film 10 has the stacked structure of the first buffer film 13 and the first oxide electrode 11 including the p-type semiconductor metal oxide, but the present invention is not limited thereto, and the second film 20 may also have such a stacked structure.

Meanwhile, the first and second conductive films 14 and 24 may be patterned as a thin film formed of a conductive material, and operate as wires of the first and second films 10 and 20. Accordingly, the first and second conductive films 14 and 24 may be formed of a precious metal capable of enduring a corrosive environment, such as at least one metal selected from the group consisting of gold (Au), silver (Ag), platinum (Pt), iridium (Ir), palladium (Pd), and an alloy thereof. In detail, the first and second conductive films 14 and 24 may be patterned by coating with a platinum paste.

Here, as shown in FIGS. 14 and 15, a portion covering the first film 10 in the first conductive film 14 may operate as a first electrode on the first film 10, and a portion contacting a third region 63 of the first oxygen ion conductive solid electrolyte 60 in the first conductive film 14 may operate as an electrode connected to the first film 10 in parallel. Similarly, a portion covering the second film 20 in the second conductive film 24 may operate as a second electrode on the second film 20, and a portion contacting a fourth region 64 of the first oxygen ion conductive solid electrolyte 60 in the second conductive film 24 may operate as an electrode connected to the second film 20 in parallel.

The portion contacting the third region 63 of the first conductive film 14 and the portion contacting the fourth region 63 of the second conductive film 24 ensures stability of a sensor signal by converting an excess charge generated at an interface between the first and second films 10 and 20 and a solid electrolyte due to application of an impressed current to an electrode, to an oxygen substitution reaction in a precious metal electrode.

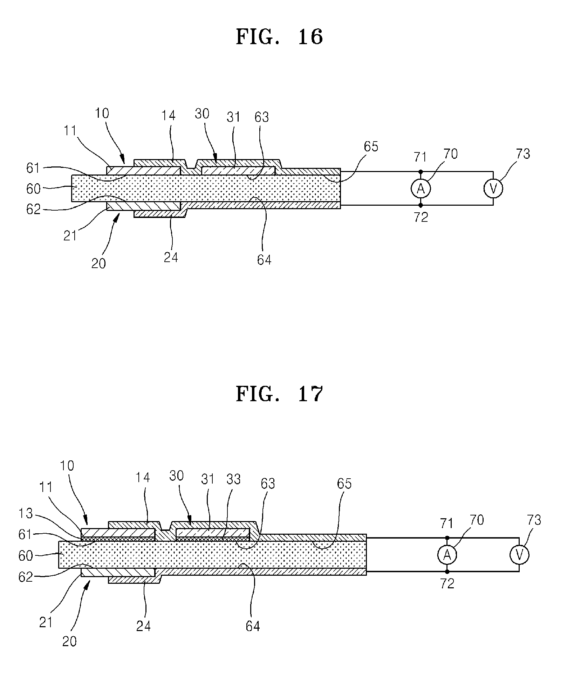

FIG. 16 is a diagram of a nitrogen-oxide gas sensor according to another embodiment of the present invention. In FIG. 16, the first through third oxide electrodes 11 through 31 are respectively formed in the first through third regions 61 through 63 of the first oxygen ion conductive solid electrolyte 60, and then the first and third oxide electrodes 11 and 31 are connected in parallel. Also, the first and second conductive films 14 and 24 are thinly formed to partially cover the first through third oxide electrodes 11 through 31 on the first oxygen ion conductive solid electrolyte 60. The first conductive film 14 is patterned to pass through both first and third oxide electrodes 11 and 31.

The first and second conductive films 14 and 24 may be patterned as a thin film formed of a conductive material, and may operate as wires of the first through third oxide electrodes 11 through 31. Accordingly, the first and second conductive films 14 and 24 may be formed of a precious metal capable of enduring a corrosive environment, such as at least one metal selected from the group consisting of gold (Au), silver (Ag), platinum (Pt), iridium (Ir), palladium (Pd), and an alloy thereof. In detail, the first and second conductive films 14 and 24 may be patterned by coating with a platinum paste.

As such, the first film 10 and a third film 30 are connected in parallel, thereby decreasing a measurement error and increasing stability over a long period of time. The measurement error is decreased and the stability over a long period of time is increased by connecting the first and third films 10 and 30 in parallel, thereby dispersing an excess charge generated and/or accumulated on an interface between the first film 10 constituting a measuring electrode, and the first oxygen ion conductive solid electrolyte 60 to the third film 30 via an oxygen substitution reaction. However, reasons for the decreased measurement error and increased stability over a long period of time are not limited thereto, and may be complex.

A portion covering a fifth region 65 of the first oxygen ion conductive solid electrolyte 60 in the first conductive film 14 operates as an electrode connected to the first and third films 10 and 30 in parallel as described above, and a portion covering the fourth region 64 of the first oxygen ion conductive solid electrolyte 60 in the second conductive film 24 operates as an electrode connected to the second film 20 in parallel.

As described above with reference to FIG. 14, at least one of the first through third oxide electrodes 11 through 31 of FIG. 16 may be formed of a solid solution or a mixture of the p-type semiconductor metal oxide and the n-type semiconductor metal oxide.

In a nitrogen-oxide gas sensor of FIG. 17, the first oxide electrode 11 and the third oxide electrode 31 respectively further include the first buffer film 13 and a third buffer film 33 from the nitrogen-oxide gas sensor of FIG. 16. Details thereof have been described above, and thus will not be repeated.

A material of an oxide electrode, and a buffer layer described above may be applied to the nitrogen-oxide gas sensors of FIGS. 11 through 13, wherein the first and second films 10 and 20 are formed on the same plane.

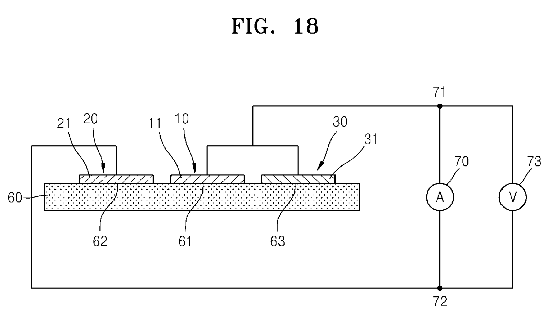

In the nitrogen-oxide gas sensors of FIGS. 11 through 13, the third film 30 connected to the first film 10 in parallel may be formed in the third region 63 of the first oxygen ion conductive solid electrolyte 60, as shown in FIG. 18.

The present invention described above may be used in as a nitrogen-oxide gas sensor for homes, cars, and industries, or in a nitrogen-oxide processing apparatus.

**Claims**

1. A nitrogen-oxide gas sensor comprising:

   a first oxygen ion conductive solid electrolyte;
   a first film contacting the first oxygen ion conductive solid electrolyte and formed of a metal oxide;
   a second film contacting the first oxygen ion conductive solid electrolyte and formed of a metal oxide;
   a power supply source for applying a current to the first and second films by electrically connecting a first node to the first film and a second node to the second film;
   a measurement unit for measuring an electric potential difference between the first and second nodes; and
   a temperature adjustment unit for uniformly maintaining a temperature of at least one of the first and second films.

2. The nitrogen-oxide gas sensor of claim 1, wherein at least one of the first and second films comprises a p-type semiconductor metal oxide and an n-type semiconductor metal oxide.

3. The nitrogen-oxide gas sensor of claim 2, wherein the n-type semiconductor metal oxide is mixed with the p-type semiconductor metal oxide.

4. The nitrogen-oxide gas sensor of claim 2, wherein the n-type semiconductor metal oxide forms a solid solution with the p-type semiconductor metal oxide.

5. The nitrogen-oxide gas sensor of claim 2, wherein one of the first and second films, which comprises the n-type semiconductor metal oxide, has a stacked structure of a film comprising a p-type semiconductor metal oxide, and a buffer film comprising the n-type semiconductor metal oxide.

**6.** The nitrogen-oxide gas sensor of any one of claims 1 through 5, wherein the temperature adjustment unit comprises:

a resistor; and
an insulating layer covering the resistor.

**7.** The nitrogen-oxide gas sensor of any one of claims 1 through 5, wherein the temperature adjustment unit is embedded in the first oxygen ion conductive solid electrolyte.

**8.** The nitrogen-oxide gas sensor of any one of claims 1 through 5, further comprising an oxygen cell separated from at least one of the first and second films, and measuring oxygen concentration or pumping oxygen in a space between the oxygen cell and the at least one of the first and second films.

**9.** The nitrogen-oxide gas sensor of claim 8, wherein the oxygen cell comprises:

a second oxygen ion conductive solid electrolyte;
a first electrode contacting the second oxygen ion conductive solid electrolyte; and
a second electrode contacting the second oxygen ion conductive solid electrolyte.

**10.** The nitrogen-oxide gas sensor of any one of claims 1 through 5, further comprising a filter member comprising an oxidation catalyst.

**11.** The nitrogen-oxide gas sensor of claim 10, wherein the oxidation catalyst comprises a precious metal particle.

FIG. 1

FIG. 2

FIG. 3

FIG. 4

# FIG. 5

# FIG. 6

FIG. 7

FIG. 8

FIG. 9

FIG. 10

FIG. 11

FIG. 12

## FIG. 13

## FIG. 14

## FIG. 15

FIG. 16

FIG. 17

FIG. 18